# EUROPEAN PATENT SPECIFICATION

(11) **EP 0 838 510 B1**
(45) Date of publication and mention of the grant of the patent: **25.07.2001**
(21) Application number: 97203283.3
(22) Date of filing: 23.10.1997
(51) Int. Cl.: C09J 153/02

(54) **Adhesive compositions**
Klebstoffe
Compositions adhésives

(30) Priority: 24.10.1996 US 29303 P
(43) Date of publication of application: 29.04.1998
(73) Proprietor: SHELL INTERNATIONALE RESEARCH MAATSCHAPPIJ B.V., 2596 HR Den Haag (NL)
(72) Inventor: Hansen, David Romme, Houston, Texas 77084 (US); Korpman, Ralf, Yalaha, Florida (US)
(74) Representative: Kortekaas, Marcellinus C. J. A.

(56) References cited:
- EP-A- 0 333 936
- EP-A- 0 683 187

## Description

This invention relates to adhesive compositions, more particularly to pressure-sensitive adhesive compositions, to their preparation, to pressure-sensitive adhesive laminae, particularly but not exclusively to tapes, patches and bandages, and to the preparation of such laminae.

Pressure sensitive adhesives are materials which have tack properties at room temperature. The pressure sensitive adhesive firmly adheres to a variety of dissimilar surfaces without the need of more than finger or hand pressure. It is known that the adhesive should be formed of a composition with sufficient internal strength to prevent leaving a residue of the adhesive on the application surface after the adhesive has been removed. The problem of providing excellent skin adhesion with block copolymer adhesives has persisted. In addition soft polyolefin films or films produced from styrenic block copolymers cannot be used with adhesive systems which have low molecular weight components such as oil and tackifying resins unless a barrier coating is used to block migration of these components.

It is known that block copolymers of vinyl aromatic hydrocarbons and conjugated dienes make good adhesives for a number of adhesive applications. For example, styrene-isoprene-styrene (SIS) triblock copolymers are known to make good adhesives for a number of tape applications such as packaging tape. However, only certain SIS adhesives systems along with a tackifying resin work well for skin adhesion and bandage applications. Prior work, such as described in U.S. Patent No. 5,274,036, has shown that combinations of SIS polymers such as "KRATON" 1112 and "KRATON" 1117 block copolymers made by Shell Oil Company ("KRATON" is a trade mark), with low molecular weight liquid rubbers, such as "Kuraray" LIR 310 (a liquid isoprene-styrene diblock copolymer), "Kuraray" LIR 50 (a liquid isoprene polymer), and "Kuraray" LIR 290 (a liquid hydrogenated isoprene polymer), ("Kuraray" is a trade mark) have utility as medical skin adhesives because there are little or no low molecular weight species such as oil or tackifying resin which can cause skin irritation.

However, these combinations exhibit only a marginal peel strength to skin. Peel strength needs to be increased to make fully successful products.

It has now been found possible to provide pressure sensitive adhesive compositions which have unusually high peel and shear values, particularly advantageous for skin adhesion and bandage adhesives, and which also do not require the presence of low molecular weight species such as tackifying resins and oils which can cause skin irritation and also migrate into flexible olefin or elastomeric bandage film substrates.

According to the present invention therefore there is provided a pressure-sensitive adhesive composition comprising
(a) a linear or multiarm styrene-isoprene-styrene block copolymer containing at least two styrene-isoprene arms having overall absolute arm weight average molecular weight in the range from 33,000 to 100,000, polystyrene content in the range from 18 to 30%wt. and polystyrene block weight average molecular weight in the range from 11,000 to 20,000,
(b) a styrene-isoprene diblock copolymer having weight average molecular weight in the range from 33,000 to 100,000, polystyrene content in the range from 18 to 30%wt., and polystyrene block weight average molecular weight in the range from 11,000 to 20,000, and
(c) a styrene-isoprene diblock copolymer having weight average molecular weight in the range from 20,000 to 40,000, polystyrene content in the range from 10 to 25%wt. and polystyrene block weight average molecular weight in the range from 4,000 to 7,000, wherein the weight ratio (a):(b) is in the range from 1:4 to 1:1 and the weight ratio (a+b):(c) is in the range from 1:1 to 1:4.

The weight ratio range (a):(b) of 1:4 to 1:1 corresponds to and may be provided by a combination of (a+b) containing 20%w to 50%wt. of (a). The weight ratio range (a+b):(c) from 1:1 to 1:4 can be achieved by using 100 to 400 parts by weight (pbw) of (c), preferably 150 to 300 pbw, per 100 pbw of (a+b).

As is well known, polymers containing both aromatic and ethylenic unsaturation can be prepared by copolymerizing one or more polyolefins, particularly a diolefin, in this case isoprene, with one or more alkenyl aromatic hydrocarbon monomers, in this case styrene. Copolymers may, of course, be random, tapered, block or a combination of these. In the context of the present invention, block copolymers of styrene and isoprene are used. The blocks in the copolymers used in the present invention are linear or multiarm.

Polymers of conjugated diolefins and copolymers of one or more conjugated diolefins and one or more alkenyl aromatic hydrocarbon monomers such as the present S-I-S or SI block copolymers comprised of linear or multiarm polymeric blocks are frequently prepared in solution using anionic polymerization techniques. In general, when solution anionic techniques are used, these S-I-S block copolymers are prepared by contacting the monomers to be polymerized simultaneously or sequentially with an organoalkali metal compound in a suitable solvent at a temperature within the range from -150°C to 300°C, preferably at a temperature within the range from 0°C to 100°C. Particularly effective anionic polymerization initiators are organolithium compounds having the general formula:

RLiₙ

Wherein:
R is an aliphatic, cycloaliphatic, aromatic or alkyl-substituted aromatic hydrocarbon having from 1 to 20 carbon atoms; and n is an integer of 1 to 4.

The concentration of the initiator can be regulated to control the molecular weight of the overall composition and of the polystyrene blocks. Conveniently, the initiator concentration maybe in the range of 0.25 to 50 millimoles per 100 grams of monomer. The required initiator level frequently depends upon the solubility of the initiator in the solvent, e.g. hydrocarbon diluent. The ratio of the initiator to the monomer determines the block size, i.e. the higher the ratio of initiator to monomer the smaller the molecular weight of the block.

In general, any of the solvents known in the prior art to be useful in the preparation of such polymers may be used. Suitable solvents, then, include straight- and branched-chain hydrocarbons such as pentane, hexane, heptane, and octane; cycloaliphatic hydrocarbons such as cyclopentane, cyclohexane, and cycloheptane and alkyl-substituted derivatives thereof; aromatic and alkyl-substituted aromatic hydrocarbons such as benzene, naphthalene, toluene, and xylene; hydrogenated aromatic hydrocarbons such as tetralin, and decalin; and linear and cyclic ethers such as methyl ether, methyl ethyl ether, and tetrahydrofuran.

As described in U.S. Patent No. 4,096,203 usually the styrene is contacted with the initiator. Next, the living polymer in solution is contacted with isoprene. The resulting living polymer has a simplified structure A-B-Li. It is at this point that the living polymer may be terminated to give a diblock copolymer (b) or (c), or additional styrene may be added to provide a linear SIS block copolymer (a), or the living polymer may be coupled to yield a linear or multiarm SIS copolymer (a).

There are a wide variety of coupling agents that can be employed. Any polyfunctional coupling agent which contains at least two reactive sites can be employed. Examples of the types of compounds which can be used include the polyepoxides, polyisocyanates, polyimines, polyaldehydes, polyketones, polyanhydrides, polyesters, and polyhalides, where "poly" includes "di-". These compounds can contain two or more types of functional groups such as the combination of epoxy and aldehyde groups, isocyanate and halide groups. Various other substituents which are inert in the treating reaction can be present such as hydrocarbon radicals as exemplified by alkyl, cycloalkyl, aryl, aralkyl and alkaryl groups and alkoxy, aryloxy, alkythio, arylthio, and tertiary amino groups. Many suitable types of these polyfunctional compounds have been described in U.S. Patents Nos. 3,595,941; 3,468,972, 3,135,716; 3,078,254, and 3,594,452. When the coupling agent has two reactive sites such as dibromoethane, the polymer will have a linear ABA structure. When the coupling agent has three or more reactive sites, such as silicon tetrachloride, the polymer will have a branched structure, such as (AB)ₙBA.

In the prior art, such as that exemplified by U.S. Patents Nos. 3,595,941 and 3,468,972, effort was always made to select the particular coupling agent or reaction conditions that resulted in the highest coupling efficiency.

When (a) is a 100% linear copolymer, or when use is made of a coupled copolymer having a high coupling efficiency to provide (a) in the compositions of the invention, it will be necessary to incorporate separately a diblock copolymer having the characteristics defined for (b) to provide all or some of (b) in the composition of the invention. However if use is made of a coupled copolymer having a low coupling efficiency in the range from 20% to 50%, (a) and (b) will be present already within the correct ratio range, and no additional (b) will need to be added.

Accordingly it is preferred for (a) and (b) together to comprise a coupled copolymer which is a styrene-isoprene-styrene triblock or multiarm copolymer formed under conditions having a coupling efficiency of 20 to 50%.

It is preferred for the weight ratio (a):(b) to be in the range from 1:3 to 9:11. Thus where (a) and (b) together comprise a coupled copolymer, this preferably has a coupling efficiency of 25 to 45%.

Coupling efficiency is defined as the weight of molecules of coupled polymer divided by the weight of molecules of coupled polymer plus the weight of molecules of uncoupled polymer. Thus, when producing an SIS linear polymer, the coupling efficiency is shown by the following relationship:$\frac{\text{wt of molecules of SIS}}{\text{wt of molecules of SIS plus SI}}$ Coupling efficiency can be determined theoretically from the stoichiometric quantity of coupling agent required for complete coupling or coupling efficiency can be determined by an analytical method such as gel permeation chromotography. Typical prior art coupling efficiency is from about 80% to almost 100%. In U.S. Patent No. 4,096,203, coupling efficiency is controlled from about 20% to about 80%, preferably about 30% to about 70%. It is also within the scope of the present invention to blend polymers from processes of differing coupling efficiency. For example, if a 35% efficiency is desired, then polymers from processes having an 80% efficiency and a 20% efficiency may be blended together in 1:3 weight ratio or a 100% triblock may be blended with a 100% diblock in a 35:65 weight ratio.

Coupling efficiency may be controlled by a number of methods. One method to reduce coupling efficiency is to add less than the stoichiometric amount of coupling agent required for complete coupling of the polymers. Another means of reducing coupling efficiency is by the premature addition of a terminator compound. These terminators, such as water or alcohol, respond very quickly and could easily be employed to cut short complete coupling of the polymers. In addition, by performing the coupling reaction at elevated temperatures, such as above 87°C (190°F), thermal termination of many of the living polymer groups (A-B-Li) occurs prior to coupling. The typical coupling conditions include a temperature of between 65° (150°F) and 77°C (170°F).

Following the coupling reaction or when the desired coupling efficiency has been obtained, the product is neutralized such as by the addition of terminators, e.g., hydrogen, water, alcohol or other reagents, for the purpose of terminating any residual unreacted lithium anions. The product is then recovered such as by coagulation utilizing hot water or steam or both.

In adhesive compositions of this invention, the weight ratio (a+b) :c is in the range 1:1 to 1:4, i.e. for each 100 parts by weight of (a+b) there are from 100 to 400 pbw of (c). If the ratio is greater than 1:1, i.e. if less than 100 pbw of (c) is used per 100 pbw (a+b), then the adhesive formulation will have poor tack and peel properties. If the ratio is less than 1:4, i.e. if more than 400 pbw of (c) is used per 100 pbw (a+b), then the shear and holding power properties suffer. It is preferred that ratio (a+b):c is in the range 1:1.5 to 1:3, i.e. per 100 pbw of (a+b), there is from 150 to 300 pbw of (c) because this gives a particularly good balance of properties.

The overall weight average molecular weight of each arm of the SIS copolymer (a) and the weight average molecular weight of the diblock copolymer (b) is in the range from 33,000 to 100,000. The term "arm molecular weight" is used because the SIS block copolymer (a) may be linear or multiarmed. The polystyrene content of each of (a) and (b) ranges from 18 to 30% by weight, preferably 20 to 24% by weight, to obtain good shear and peel properties. Where (a) and (b) together comprise a coupled copolymer, coupling efficiency ranges from 20 to 50% by weight, preferably 25 to 45% by weight, to wet out the rough skin surface and to provide good peel properties. The polystyrene block weight average molecular weight is in the range from 11,000 to 20,000 to provide sufficient strength.

The overall weight average molecular weight of the low molecular weight diblock copolymer (c) is in the range from 20,000 to 40,000 to provide low viscosities and good tack properties. The polystyrene content is in the range from 10 to 25% by weight, preferably 11 to 18% by weight, to provide good tack properties. The polystyrene block weight average molecular weight is in the range from 4000 to 7000, preferably 4000 to 5000, to provide the appropriate balance of low viscosity, tack properties, and peel properties. The low molecular weight diblock copolymer (c) is important for achieving pressure sensitive properties and low viscosities for hot melt processing.

The molecular weights of linear polymers or unassembled linear segments of polymers such as mono-, di-, triblock, etc., or the arms of star polymers before coupling are conveniently measured by Gel Permeation Chromatography (GPC), where the GPC system has been appropriately calibrated. For anionically polymerized linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the main species shown on the chromatograph. For polydisperse polymers the weight average molecular weight should be calculated from the chromatograph curve. The materials used in the columns of the GPC are styrene-divinyl benzene gels or silica gels. The solvent is tetrahydrofuran and the detector is a refractive index detector. The absolute molecular weight can be calculated by calibrating the GPC with known polystyrene standards, measuring the styrene block molecular weight during the polymerization, and then measuring the total percent styrene of the molecule by NMR (nuclear magnetic resonance). The absolute arm molecular weight of the total molecule is then calculated by dividing the styrene block molecular weight by the % styrene in the arm. In this specification, the term "molecular weight", unless otherwise specifically indicated, means weight average molecular weight.

Methods of controlling the molecular weights of the blocks and the overall polymer are quite well known. For instance, such are disclosed in U.S. Patent No. 3,149,182, which states that the amount of monomer can be kept constant and different molecular weights can be achieved by changing the amount of catalyst or the amount of catalyst can be kept constant and different molecular weights can be achieved by varying the amount of the monomer, and in U.S. Patent No. 3,231,635.

One example of a typical composition within the scope of the present invention has 100 parts by weight of an SIS block copolymer (a+b) which has an overall absolute molecular weight of 141,000 (and thus, an absolute arm molecular weight of 70,500), a coupling efficiency of 35%, a polystyrene block weight average molecular weight of 15,500, a polystyrene content of 22%, and 250 parts by weight of a low molecular weight diblock copolymer (c) having an overall absolute peak molecular weight of 30,000, a polystyrene content of 13% by weight, and a polystyrene block molecular weight of 4000.

It is not necessary to add a tackifying resin that is compatible with the elastomeric conjugated diene block as is required in most pressure sensitive adhesive compositions. Low levels can be added if necessary to adjust tack. Compositions in accordance with the present invention have been found to have sufficient tack, it is believed by virtue of the particular specific combination of polystyrene contents, and dangling rubber chain ends, etc. for them to be extremely useful in the intended applications, particularly applications involving skin adhesion and bandage applications.

It is preferred that the adhesive composition of the instant invention do not contain plasticizers, such as rubber extending plasticizers, or compounding oils or liquid resins because they are unnecessary and may cause other problems stemming from migration thereof into certain flexible substrates.

Optional components which may if desired be included in compositions of the present invention are stabilizers which inhibit or retard heat degradation, oxidation, skin formation and color formation. Stabilizers are typically added to the commercially available compounds in order to protect the polymers against heat degradation and oxidation during the preparation, use and high temperature storage of the adhesive composition.

Other stabilizers known in the art may also be incorporated into the adhesive composition. These may be for protection during the life of the disposable article against, for example, oxygen, ozone and ultraviolet radiation. However, as those skilled in the art will appreciate, it is important that all additional stabilizers must be compatible with one another.

The adhesive compositions of the present invention may conveniently be prepared in accordance with invention by blending the components (a), (b) and (c) at an elevated temperature, preferably in the range from 130°C to 200°C, until a homogeneous blend is obtained, usually less than three (3) hours. Various method of blending are known to the art and any method that produces a homogeneous blend is satisfactory.

Pressure-sensitive adhesives can be used as free films or coated onto a substrate. By choice of suitable laminar substrate, products such as tapes, patches, labels or bandages may be made.

The invention thus further provides a pressure-sensitive adhesive lamina comprising a laminar substrate coated on at least a part of at least one surface thereof with a pressure-sensitive adhesive composition according to the invention.

Preferably the lamina is in the form of a tape, a patch or a bandage. The laminar substrate may be, for example, a plastics or rubber film or foam, or a foil, paper, or woven or non-woven fabric.

The invention also provides a process for preparing a pressure-sensitive adhesive lamina as defined above which comprises coating at least part of at least one surface of a laminar substrate with a pressure-sensitive adhesive composition according to the invention.

The pressure-sensitive adhesive composition may be made into a solvent cement by dissolving the composition in a suitable solvent such as xylene. Such a cement may be applied to a surface to be coated and the solvent evaporated off to leave the coating on the surface. However, it is preferred to use hot-melt methods, in order to minimise or avoid possible environmental pollution caused by evaporation of solvent species into the atmosphere. In such methods, the composition is heated until liquid, and is applied by known roller, slot die, spray or other convenient coating method. The laminar substrate may be cut or slit into tapes, patch or bandage form before or after coating with pressure-sensitive adhesive composition.

The invention will be further understood from the following illustrative examples thereof.

### Examples 1 to 4

A number of compositions were prepared for use in the following experiments. These compositions and their characteristics are described below. Examples 1 to 4 were in accordance with the invention. Comp. A to K were comparative examples outside the scope of the invention. The polystyrene content was determined by NMR spectroscopy. The polymers used are identified in Table 1 below.

Test procedures employed in Tables 2 and 3 were as follows.

The SAFT (shear adhesion failure temperature) was measured by 2.54 cm x 2.54 cm(1" x 1") Mylar to Mylar lap joint with a 1 kg weight. SAFT measures the temperature at which the lap shear assembly fails under load. Rolling Ball Tack (RBT) is the distance a steel ball rolls on the adhesive film with a standard initial velocity (Pressure Sensitive Tape Council (USA) Test No. 6). Small numbers indicate aggressive tack. Holding Power (HP) is the time required to pull a standard area (1.27 cm x 1.27 cm (½ in. x ½ in. )) of tape from a standard test surface (steel, Kraft paper) under a standard load (2 kg), in shear at 2° antipeel (Pressure Sensitive Tape Council Method No. 7). Long times indicate high adhesive strength. 180° peel was determined by Pressure Sensitive Tape Council Method No.
1. Large numbers indicate high strength when peeling a test tape from a steel substrate. Polyken probe tack (PPT) was determined by ASTM D-2979. Loop tack (LT) was determined using TLMI loop tack tester. High numbers for PPT and LT indicate aggressive tack.

**Table 1.**

| Polymer Identification | | | | |
|---|---|---|---|---|
| Sample ID | CE(%)* | PSC (wt.%) | Arm Mw | PS Block Mw |
| "KRATON" 1117 | 66 | 17.4 | 61,000 | 10,600 |
| "KRATON" 1119 | 35 | 22 | 70,500 | 15,500 |
| "KRATON" 1112 | 61 | 15 | 73,000 | 10,900 |
| LVSI 101 | 0 | 13 | 31,000 | 4,000 |
| PP5586 | 0 | 13.8 | 30,800 | 4,300 |
| PP5590 | 0 | 13.8 | 34,800 | 4,800 |
| PP5468 | 0 | 24 | 25,800 | 6,200 |
| Polyisoprene | 0 | 0 | 30,000 | 0 |
| PP5469 | 0 | 13.9 | 23,700 | 3,300 |

| | | | | |
|---|---|---|---|---|
| * copolymers with a coupling efficiency of 0 are diblocks. CE = coupling efficiency; PSC = polystyrene content. | | | | |

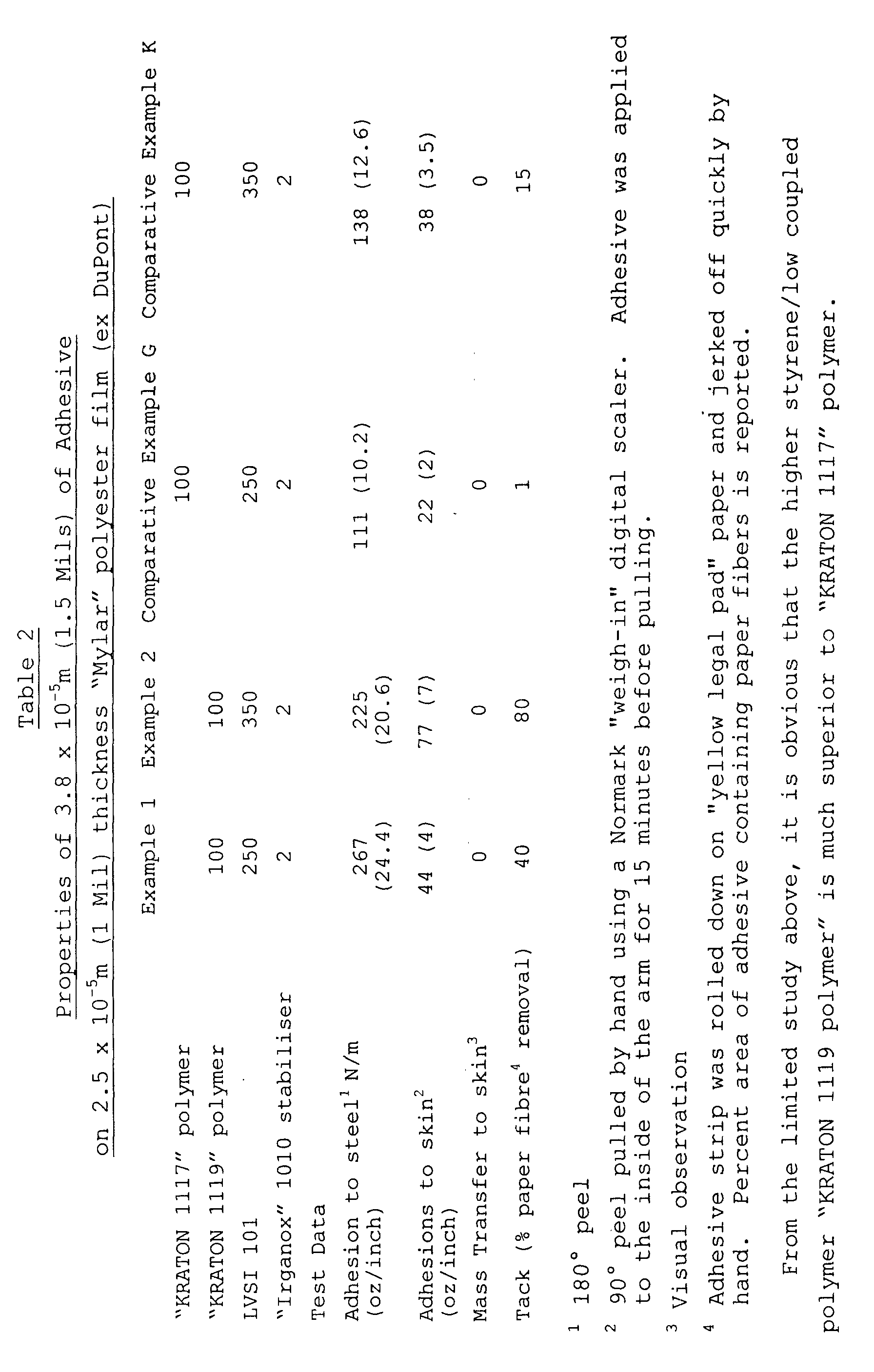

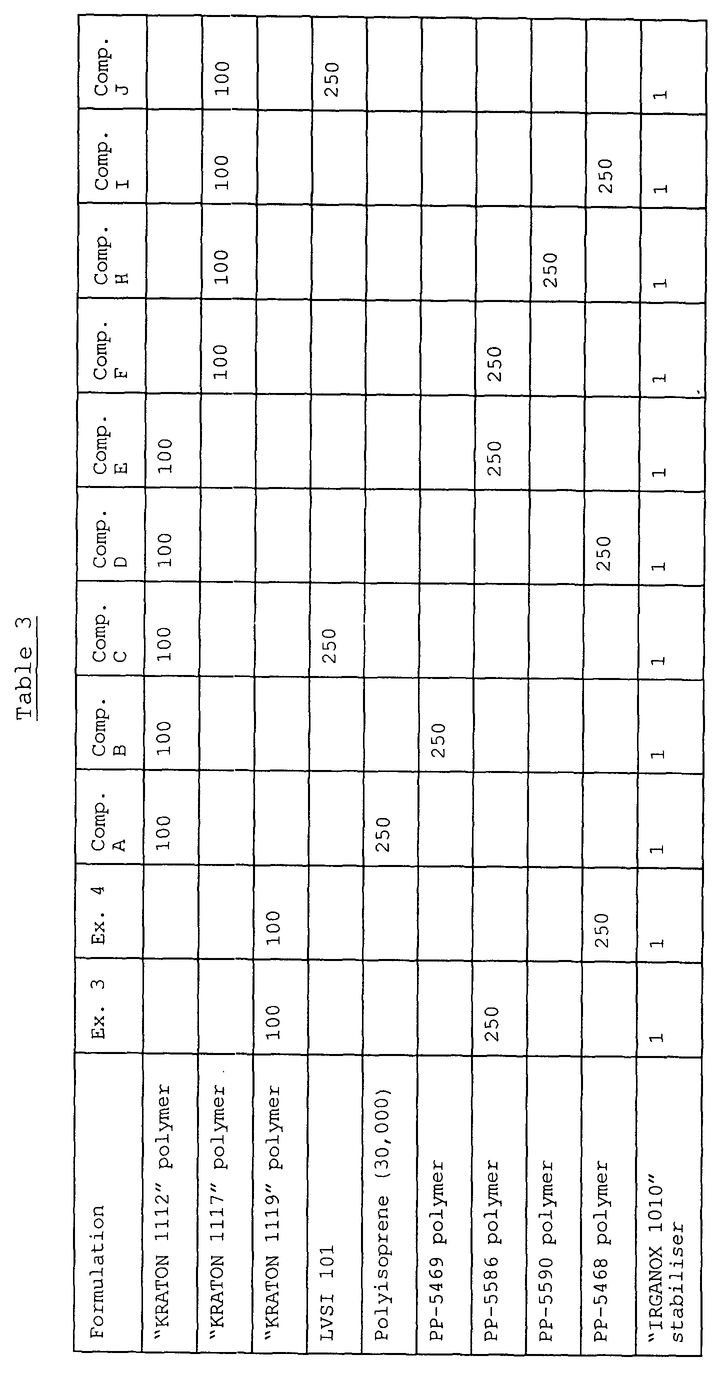

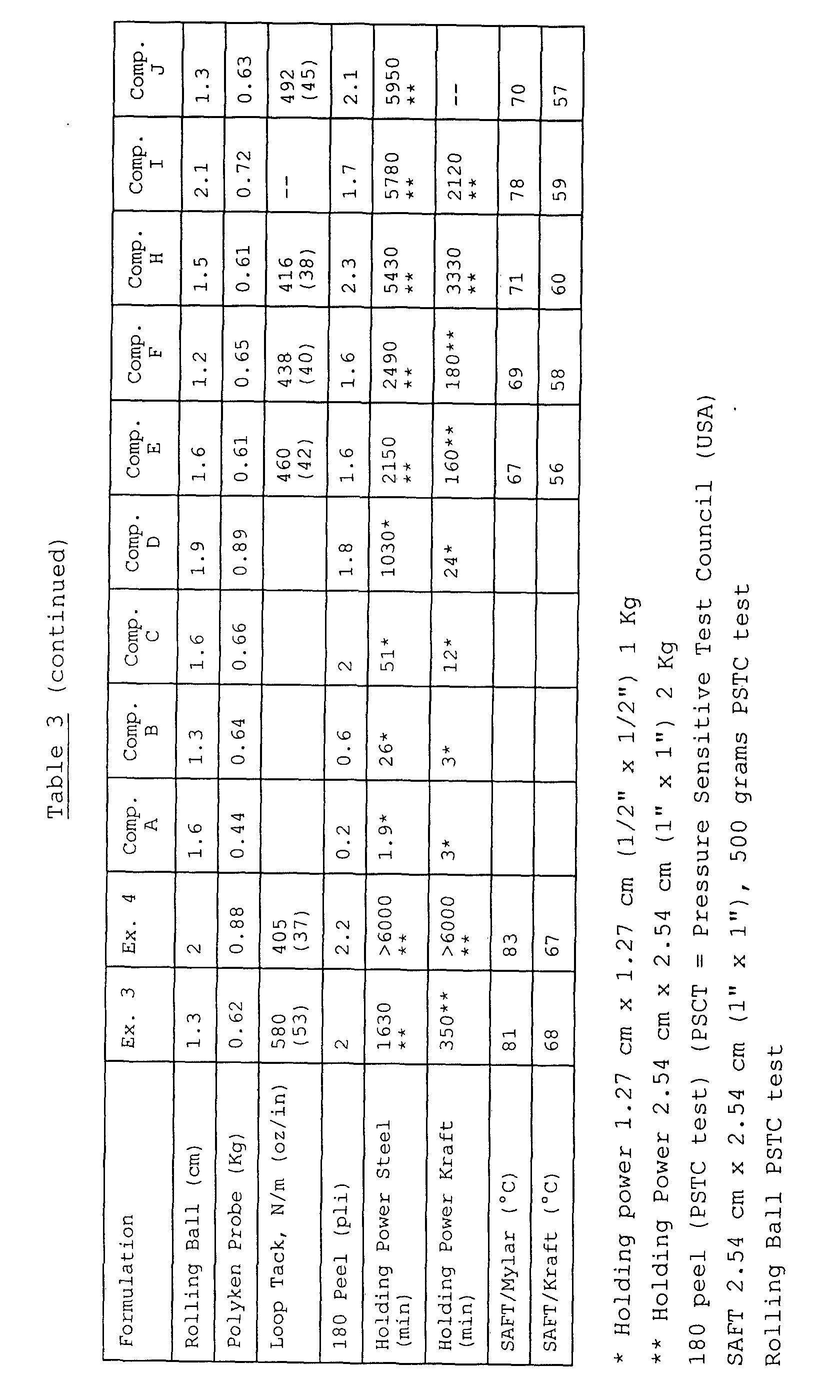

The conclusion that can be drawn from the data above is
(1) The styrene block of the low molecular weight S-I diblock copolymer (c) must be greater than approximately 4,000 molecular weight or the peel and shear properties are poor. (Formulations A and B compared to C, D, E, F, H, I, J, and Examples 3 and 4)
(2) "KRATON 1119"-containing formulations have superior peel properties SAFT and shear properties to rough substrates such as Kraft paper (Example 3 compared to E and F, and Example 4 compared to H, I, and J)
(3) Adhesive formulations based on "KRATON 1119" (a+b) and liquid S-I diblocks (c) do not contain any low molecular weight, mobile components such as oils and tackifying resins. This should allow the use of flexible substrates based on poly alpha olefins, low density polyethylene, or styrenic block copolymers (SBS, SIS, SEBS, or SEPS) as mentioned in U.S. Patent No. 4,024,312) or combinations thereof. Normally these flexible films would absorb oils and tackifying resins of normal adhesive formulations, thereby changing the adhesive properties over time. Since the low coupled SIS (a+b) and SI liquid diblocks (c) are not mobile or fugitive, the adhesive properties will be stable with time and should be ideal adhesives for these flexible substrates.
(4) Formulations containing liquid S-I diblocks which have styrene contents greater than 13 percent styrene and styrene endblocks >4000 show improved holding power and peel properties, particularly when combined with low coupled SIS polymers which have styrene contents greater than 15 percent.

## Claims

1. A pressure-sensitive adhesive composition comprising
(a) a linear or multiarm styrene-isoprene-styrene block copolymer containing at least two styrene-isoprene arms having absolute arm weight average molecular weight in the range from 33,000 to 100,000, polystyrene content in the range from 18 to 30%wt., and polystyrene block weight average molecular weight in the range from 11,000 to 20,000,
(b) a styrene-isoprene diblock copolymer having weight average molecular weight in the range from 33,000 to 100,000, polystyrene content in the range from 18 to 30%wt., and polystyrene block weight average molecular weight in the range from 11,000 to 20,000, and
(c) a styrene-isoprene diblock copolymer having weight average molecular weight in the range from 20,000 to 40,000, polystyrene content in the range from 10 to 25%wt. and polystyrene block weight average molecular weight in the range from 4000 to 7000, wherein the weight ratio (a):(b) is in the range from 1:4 to 1:1 and the weight ratio (a+b):(c) is in the range from 1:1 to 1:4.

2. A composition according to Claim 1 wherein (a) and (b) together comprise a coupled copolymer which is a styrene-isoprene-styrene triblock or multiarm copolymer formed under conditions having a coupling efficiency of 20 to 50%.

3. A composition according to Claim 1 or 2 wherein the weight ratio (a+b):c is in the range from 1:1.5 to 1:3.

4. A composition according to Claim 1, 2 or 3 wherein the weight ratio (a):(b) is in the range from 1:3 to 9:11.

5. A composition according to any one of Claims 1 to 4 wherein in (a) and (b) the polystyrene content is in the range from 20 to 24%wt.

6. A composition according to any one of Claims 1 to 5 wherein in (c) the polystyrene block weight average molecular weight is in the range from 4000 to 5000, and the polystyrene content is in the range from 11 to 18%wt.

7. A process for preparing an adhesive composition according to any one of Claims 1 to 6 which comprises blending components (a) (b) and (c) at a temperature in the range from 130°C to 200°C until a homogeneous blend is obtained.

8. A pressure-sensitive adhesive lamina comprising a laminar substrate coated on at least a part of at least one surface thereof with a pressure-sensitive adhesive composition according to any one of Claims 1 to 7.

9. A lamina according to Claim 8 in the form of a tape, a patch or a bandage.

10. A process for preparing a pressure-sensitive adhesive lamina according to Claim 8 or 9 which comprises coating at least part of at least one surface of a laminar substrate with a pressure-sensitive adhesive composition according to any one of claims 1 to 7.

## Patentansprüche

1. Druckempfindliche Klebstoffzusammensetzung, umfassend
(a) ein lineares oder mehrarmiges Styrol-Isopren-Styrol-Blockcopolymer mit einem Gehalt an wenigstens zwei Styrol-Isopren-Armen mit einem absoluten durchschnittlichen Arm-Molekulargewicht im Bereich von 33.000 bis 100.000, einem Polystyrolgehalt im Bereich von 18 bis 30 Gew.-% und einem gewichtsmittleren Molekulargewicht des Polystyrolblocks im Bereich von 11.000 bis 20.000,
(b) ein Styrol-Isopren-Zweiblockcopolymer mit einem gewichtsmittleren Molekulargewicht im Bereich von 33.000 bis 100.000, einem Polystyrolgehalt im Bereich von 18 bis 30 Gew.-% und einem gewichtsmittleren Molekulargewicht des Polystyrolblocks im Bereich von 11.000 bis 20.000, und
(c) ein Styrol-Isopren-Zweiblockcopolymer mit einem gewichtsmittleren Molekulargewicht im Bereich von 20.000 bis 40.000, einem Polystyrolgehalt im Bereich von 10 bis 25 Gew.-% und einem gewichtsmittleren Molekulargewicht des Polystyrolblocks im Bereich von 4.000 bis 7.000, worin das Gewichtsverhältnis (a):(b) im Bereich von 1:4 bis 1:1 liegt und das Gewichtsverhältnis (a+b):(c) im Bereich von 1:1 bis 1:4 liegt.

2. Zusammensetzung nach Anspruch 1, worin (a) und (b) zusammen ein gekuppeltes Copolymer umfassen, das ein Styrol-Isopren-Styrol-Dreiblockcopolymer oder Mehrarmcopolymer ist, gebildet unter Bedingungen mit einer Kupplungseffizienz von 20 bis 50%.

3. Zusammensetzung nach Anspruch 1 oder 2, worin das Gewichtsverhältnis (a+b):(c) im Bereich von 1:1,5 bis 1:3 liegt.

4. Zusammensetzung nach Anspruch 1, 2 oder 3, worin das Gewichtsverhältnis (a):(b) im Bereich von 1:3 bis 9:11 liegt.

5. Zusammensetzung nach einem der Ansprüche 1 bis 4, wobei in (a) und (b) der Polystyrolgehalt im Bereich von 20 bis 24 Gew.-% liegt.

6. Zusammensetzung nach einem der Ansprüche 1 bis 5, wobei in (c) das gewichtsmittlere Molekulargewicht des Polystyrolblocks im Bereich von 4.000 bis 5.000 liegt und der Polystyrolgehalt im Bereich von 11 bis 18 Gew.-% liegt.

7. Verfahren zur Herstellung einer Klebstoffzusammensetzung nach einem der Ansprüche 1 bis 6, das ein Vermischen der Komponenten (a), (b) und (c) bei einer Temperatur im Bereich von 130°C bis 200°C bis zur Erzielung eines homogenen Gemisches umfaßt.

8. Druckempfindliches Klebstoffblatt, umfassend ein laminares Substrat, das auf wenigstens einem Teil wenigstens einer Oberfläche hievon mit einer druckempfindlichen Klebstoffzusammensetzung nach einem der Ansprüche 1 bis 7 bedeckt ist.

9. Blatt nach Anspruch 8 in Form eines Bandes, eines Pflasters oder eines Verbandes.

10. Verfahren zur Herstellung eines druckempfindlichen Klebstoffblattes nach Anspruch 8 oder 9, das ein Beschichten wenigstens eines Teils wenigstens einer Oberfläche eines laminaren Substrats mit einer druckempfindlichen Klebstoffzusammensetzung nach einem der Ansprüche 1 bis 7 umfaßt.

## Revendications

1. Composition d'adhésif sensible à la pression comprenant :
(a) un copolymère bloc de styrène-isoprène-styrène linéaire ou multibranché contenant au moins deux branches de styrène-isoprène ayant un poids moléculaire moyen pondéral de branche absolu allant de 33.000 à 100.000, une teneur en polystyrène allant de 18 à 30% en poids et un poids moléculaire moyen pondéral de bloc de polystyrène allant de 11.000 à 20.000,
(b) un copolymère dibloc de styrène-isoprène ayant un poids moléculaire moyen pondéral allant de 33.000 à 100.000, une teneur en polystyrène allant de 18 à 30% en poids et un poids moléculaire moyen pondéral de bloc de polystyrène allant de 11.000 à 20.000, et
(c) un copolymère dibloc de styrène-isoprène ayant un poids moléculaire moyen pondéral allant de 20.000 à 40.000, une teneur en polystyrène allant de 10 à 25% en poids et un poids moléculaire moyen pondéral de bloc de polystyrène allant de 4.000 à 7.000, dans laquelle le rapport en poids (a)/(b) se situe dans la gamme de 1/4 à 1/1 et le rapport en poids (a+b)/(c) se situe dans la gamme de 1/1 à 1/4.

2. Composition suivant la revendication 1, dans laquelle (a) et (b) comprennent ensemble un copolymère couplé qui est un copolymère tribloc ou multibranché de styrène-isoprène-styrène formé sous des conditions présentant une efficacité de couplage de 20 à 50%.

3. Composition suivant l'une ou l'autre des revendications 1 et 2, dans laquelle le rapport en poids (a+b)/(c) se situe dans la gamme de 1/1,5 à 1/3.

4. Composition suivant l'une quelconque des revendications 1, 2 et 3, dans laquelle le rapport en poids (a)/(b) se situe dans la gamme de 1/3 à 9/11.

5. Composition suivant l'une quelconque des revendications 1 à 4, dans laquelle dans (a) et (b) la teneur en polystyrène se situe dans la gamme de 20 à 24% en poids.

6. Composition suivant l'une quelconque des revendications 1 à 5, dans laquelle dans (c) le poids moléculaire moyen pondéral de bloc de polystyrène est de 4.000 à 5.000 et la teneur en polystyrène est de 11 à 18% en poids.

7. Procédé de préparation d'une composition d'adhésif suivant l'une quelconque des revendications 1 à 6, qui comprend le mélange de composants (a), (b) et (c) à une température allant de 130°C à 200°C jusqu'à ce qu'un mélange homogène soit obtenu.

8. Stratifié d'adhésif sensible à la pression comprenant un substrat laminaire sur au moins une partie d'au moins une surface duquel est appliquée une composition d'adhésif sensible à la pression suivant l'une quelconque des revendications 1 à 7.

9. Stratifié suivant la revendication 8, sous la forme d'un ruban, d'un timbre ou d'un bandage.

10. Procédé de préparation d'un stratifié d'adhésif sensible à la pression suivant l'une ou l'autre des revendications 8 et 9, qui comprend l'application sur au moins une partie d'au moins une surface d'un substrat laminaire d'une composition d'adhésif sensible à la pression suivant l'une quelconque des revendications 1 à 7.
